# EUROPÄISCHE PATENTANMELDUNG

(11) **EP 4 813 552 A1**
(43) Veröffentlichungstag der Anmeldung: **30.09.2026**
(21) Anmeldenummer: 25166429.8
(22) Anmeldetag: 26.03.2025
(51) Int. Cl.: B23B 31/20

(54) **BEFESTIGUNGS- UND KOPPLUNGSVORRICHTUNG FÜR EIN ROTIERENDES WERKZEUG UND WERKZEUGMASCHINE MIT EINER SOLCHEN BEFESTIGUNGS- UND KOPPLUNGSVORRICHTUNG**

(71) Anmelder: C. & E. Fein GmbH, 73529 Schwäbisch Gmünd-Bargau (DE)
(72) Erfinder: BEK, Fabian, 73560 Böbingen (DE)
(74) Vertreter: Wallinger Ricker Schlotter PartGmbB

(57) **Zusammenfassung**

Die Erfindung betrifft eine Befestigungs- und Kopplungsvorrichtung (6) für ein rotierendes Werkzeug, welche zur Verbindung mit einer Antriebseinheit (2) einer Werkzeugmaschine (1) mit einem rotierenden Antrieb vorgesehen ist, mit einer Kopplungswelle (14), einer Spannzange (9) zur Aufnahme eines Werkzeugschaftes, einer Spanneinrichtung (13), um in einem von außen unbelasteten Zustand eine Spannstellung der Spannzange (9) aufrechtzuerhalten, einer Löseeinrichtung (21), um bei stillstehender Kopplungswelle (14) die Spanneinrichtung (13) mit einer Lösekraft zu beaufschlagen und die Spannzange (9) dadurch in eine Lösestellung zu bewegen, und einer Betätigungseinrichtung (34), um die Löseeinrichtung (21) durch den Benutzer der Werkzeugmaschine (1), insbesondere durch Handkraft, zu betätigen.

Auf diese Weise wird eine einfache Möglichkeit zur Befestigung und zum Lösen eines Werkzeugs an der bzw. von der Werkzeugmaschine (1) ohne separates Werkzeug geschaffen.

## Beschreibung

Die vorliegende Erfindung betrifft eine Befestigungs- und Kopplungsvorrichtung für ein rotierendes Werkzeug, welche zur Verbindung mit einer Antriebseinheit einer Werkzeugmaschine mit einem rotierenden Antrieb vorgesehen ist, sowie eine Werkzeugmaschine mit einer solchen Befestigungs- und Kopplungsvorrichtung und einer Antriebseinheit. Das von der Antriebseinheit erzeugte Antriebsdrehmoment wird dabei auf die mit der Antriebseinheit verbundene Befestigungs- und Kopplungsvorrichtung übertragen, in welcher das rotierende Werkzeug befestigt ist, und versetzt das Werkzeug auf diese Weise in Rotation. Das rotierende Werkzeug wird somit durch die Befestigungs- und Kopplungsvorrichtung an die Antriebseinheit gekoppelt. Der rotierende Antrieb der Antriebseinheit ist in der Regel ein Elektromotor, wobei jedoch auch andere Antriebe wie ein Verbrennungsmotor denkbar sind.

Die Erfindung wird im Zusammenhang mit einer Schleifmaschine und insbesondere mit einem Geradschleifer beschrieben. Es wird aber darauf hingewiesen, dass die Erfindung auch unabhängig von der Art der Werkzeugmaschine und des damit verbundenen rotierenden Werkzeugs eingesetzt werden kann. So ist die Erfindung beispielsweise auch für eine Poliermaschine, eine Kreissäge, eine Bohrmaschine oder eine Fräsmaschine einsetzbar.

Vorzugsweise wird die Werkzeugmaschine vom Benutzer mit der Hand gehalten. Weiter vorzugsweise ist die Werkzeugmaschine für einen Akkubetrieb, einen Netzbetrieb oder einen wahlweisen Akku- oder Netzbetrieb ausgelegt.

Vorzugsweise fällt die Rotationsachse des rotierenden Antriebs der Werkzeugmaschine mit der Rotationsachse des rotierenden Werkzeugs zusammen, wie dies etwa bei dem hier beispielhaften Geradschleifer der Fall ist.

Die Erfindung geht davon aus, dass das rotierende Werkzeug, bei dem hier beispielhaften Geradschleifer also das Schleifwerkzeug, zur Verbindung mit der Befestigungs- und Kopplungsvorrichtung der Werkzeugmaschine einen stabförmigen Werkzeugschaft aufweist. Der Werkzeugschaft ist dabei insbesondere zylindrisch, kann jedoch auch im Querschnitt eine Sechskant-, Vierkant- oder eine andere, insbesondere drehsymmetrische, Form aufweisen. Zylindrische Werkzeugschäfte sind standardmäßig in unterschiedlichen Durchmessern, etwa 3 mm, 6 mm, 8 mm oder 1/4 Zoll, erhältlich.

Die Aufnahme und Befestigung eines solchen Werkzeugschaftes mittels einer Spannzange ist im Stand der Technik bereits seit langem bekannt. Unter einer Spannzange wird dabei eine im Wesentlichen zylindrische Hülse zur koaxialen Aufnahme des Werkzeugschaftes von einem äußeren Ende aus verstanden, deren Mantelfläche nach radial innen an den Werkzeugschaft angepresst werden kann und diesen auf diese Weise festklemmt. Zu diesem Zweck ist die Mantelfläche der Spannzange vorzugsweise mit einem oder mehreren, parallel zur Längsachse der Spannzange verlaufenden und an dem äußeren Ende der Spannzange beginnenden Schlitzen versehen. Hierdurch werden auf der Mantelfläche eine oder mehrere, vorzugsweise gleich breite, Zungen gebildet, die an ihren dem äußeren Ende der Spannzange gegenüberliegenden, inneren Enden in die durchgehende, ungeschlitzte Mantelfläche übergehen. Diese Zungen können aufgrund ihrer Elastizität nach radial innen gedrückt werden und den in die Spannzange eingeführten Werkzeugschaft festklemmen. Vorzugsweise ist der Außendurchmesser des Werkzeugschaftes gleich dem Innendurchmesser der Spannzange, sodass der Werkzeugschaft spielfrei in die Spannzange eingeführt werden kann und die Zungen der Spannzange nur geringfügig nach radial innen an den Werkzeugschaft angepresst werden müssen, um diesen festzuklemmen. Auf diese Weise ist auch ein runder Lauf des rotierenden Werkzeugs bei der Benutzung der Werkzeugmaschine gewährleistet.

Wenn hier und im Folgenden von einem "äußeren" Ende einzelner Komponenten die Rede ist, so ist damit stets die Richtung entlang der Längsachse der Werkzeugmaschine zu dem Ende der Spannzange hin gemeint, an der diese den Werkzeugschaft aufnimmt. Mit einem "inneren" Ende einer Komponente ist dementsprechend das dem äußeren Ende entgegengesetzte Ende entlang der Längsachse der Werkzeugmaschine gemeint. Dasselbe gilt für Begriffe wie "nach außen" oder "nach innen". Das äußere Ende der Spannzange bildet somit auch das äußere Ende der gesamten Werkzeugmaschine.

Die Spannzange ist an ihrem inneren Ende vorzugsweise mit einer Abtriebswelle der Antriebseinheit der Werkzeugmaschine lösbar oder unlösbar, insbesondere einstückig, in jedem Fall aber drehfest verbunden, sodass das Drehmoment der Antriebseinheit über deren Abtriebswelle auf die Spannzange und den darin festgeklemmten Werkzeugschaft und somit auf das rotierende Werkzeug übertragen werden kann. Durch die drehfeste Verbindung zwischen der Spannzange und der Abtriebswelle der Antriebseinheit ist sichergestellt, dass im Betrieb, beim Drehen der Antriebseinheit, die Spannzange mit der Abtriebswelle fest verbunden bleibt und beide, die Spannzange und die Abtriebswelle, sich als eine Einheit gemeinsam drehen.

Das Anpressen der Zungen der Spannzange nach radial innen und damit das Festklemmen des Werkzeugschaftes erfolgt vorzugsweise dadurch, dass die Spannzange im Bereich der Zungen zumindest abschnittsweise eine konische Außenfläche aufweist, welche sich zum inneren Ende der Spannzange hin verjüngt. Die Spannzange ist dabei an ihrem inneren Ende in eine Spannzangenaufnahme eingesetzt, welche ebenso im Wesentlichen die Form einer zylindrischen Hülse aufweisen kann und koaxial zur Spannzange angeordnet ist, wobei die Spannzange an dem äußeren Ende der Spannzangenaufnahme axial über das Ende der Spannzangenaufnahme hervorstehen kann. Die Spannzangenaufnahme weist an ihrer inneren Oberfläche ebenfalls eine konische Fläche auf, welche sich in der gleichen Richtung verjüngt und die gleiche Neigung aufweist wie die konische Fläche der Spannzange.

Wird nun die Spannzange relativ zur Spannzangenaufnahme axial nach innen bewegt, so werden aufgrund der Keilwirkung der beiden zueinander angeordneten konischen Flächen die Zungen der Spannzange unter Verringerung der Breite der zwischen den Zungen verlaufenden Schlitze nach radial innen gepresst. Wie bereits beschrieben, wird dadurch ein in die Spannzange eingesetzter Werkzeugschaft festgeklemmt.

Eine aus dem Stand der Technik bekannte Spannzange ist an ihrem inneren Ende mit einem Außengewinde versehen und in ein entsprechendes Innengewinde in dem äußeren, offenen Ende der Spannzangenaufnahme eingeschraubt. Weiterhin ist die Spannzange an ihrem über die Spannzangenaufnahme hinausstehenden axialen Abschnitt mit einem Außensechskant versehen, und die Spannzangenaufnahme weist an ihrer Außenfläche ebenfalls einen Außensechskant oder zumindest zwei parallele Flächen zum Ansetzen eines Gabelschlüssels auf. Die axiale Bewegung der Spannzange relativ zur Spannzangenaufnahme in Richtung ihres inneren Endes erfolgt dann dadurch, dass der Benutzer die Spannzange bei eingesetztem Werkzeugschaft mit einem Gabelschlüssel in die Spannzangenaufnahme einschraubt und diese dabei durch einen weiteren Gabelschlüssel festhält, um sie am Mitdrehen zu hindern. Sofern die Spannzange oder die Spannzangenaufnahme anderweitig blockiert und so am Mitdrehen gehindert werden kann, ist einer der beiden Gabelschlüssel entbehrlich.

Diese bekannte Art der Befestigung des Werkzeugschaftes in der Spannzange ist jedoch vom Standpunkt des Bedienungskomforts der Werkzeugmaschine aus nicht zufriedenstellend, da sie relativ zeitaufwändig ist und überdies hierfür separates Werkzeug, nämlich wenigstens ein Gabelschlüssel, benötigt wird. Die Erfahrung aus der Praxis zeigt jedoch, dass derartiges separates Werkzeug oft verlegt wird oder sich zumindest nicht dort befindet, wo der Benutzer es gerade braucht.

Der Erfindung liegt daher die Aufgabe zugrunde, eine einfache Möglichkeit zur Befestigung und zum Lösen eines Werkzeugs an der bzw. von der Werkzeugmaschine ohne separates Werkzeug zu schaffen.

Diese Aufgabe wird erfindungsgemäß durch eine Befestigungs- und Kopplungsvorrichtung gemäß Anspruch 1 gelöst. Zu bevorzugende Weiterbildungen der Erfindung sind Gegenstand der Unteransprüche.

Die erfindungsgemäße Befestigungs- und Kopplungsvorrichtung für ein rotierendes Werkzeug, welche zur Verbindung mit einer Antriebseinheit einer Werkzeugmaschine mit einem rotierenden Antrieb vorgesehen ist, weist die im Folgenden beschriebenen Komponenten und Untereinheiten auf. Es wird darauf hingewiesen, dass diese Komponenten und Untereinheiten nicht disjunkt, also nicht überschneidungsfrei, sein müssen. Vielmehr können voneinander verschiedene Komponenten oder Untereinheiten einzelne Elemente gemeinsam haben. Insbesondere können einzelne Untereinheiten einzelne Komponenten vollständig beinhalten.

Die Befestigungs- und Kopplungsvorrichtung weist eine Kopplungswelle mit einer Längsachse auf, wobei die Kopplungswelle, wenn die Befestigungs- und Kopplungsvorrichtung mit der Antriebseinheit der Werkzeugmaschine verbunden ist, durch den rotierenden Antrieb um die Längsachse rotierbar ist. Dabei wird die Kopplungswelle drehmomentübertragend mit einer Abtriebswelle der Antriebseinheit, insbesondere mit einer Motorwelle eines Elektromotors, verbunden, wobei die Verbindung vorzugsweise koaxial ist, wie beispielsweise bei einem Geradschleifer. Die Verbindung zwischen Abtriebswelle und Kopplungswelle kann auch über ein Getriebe, beispielsweise ein Stirnrad- oder ein Planetengetriebe, erfolgen, wobei dann die Anordnung zwischen Abtriebswelle und Kopplungswelle versetzt erfolgen kann. Die Verbindung kann jedoch auch derart erfolgen, dass die beiden Wellen einen von Null verschiedenen Winkel einschließen, insbesondere einen rechten Winkel, wie beispielsweise bei einem Winkelschleifer. Die Verbindung erfolgt dann vorzugsweise über ein Gelenk oder ein Winkelgetriebe, insbesondere ein Kegelradgetriebe.

Wenn im Folgenden von einer "rotierenden Kopplungswelle" die Rede ist, so soll dies bedeuten, dass die Kopplungswelle mit einer Drehzahl rotiert, welche für die Benutzung der Werkzeugmaschine mit dem rotierenden Werkzeug geeignet ist, d. h. bei der eine Bearbeitung eines Werkstücks durch das rotierende Werkzeug möglich ist. Diese Drehzahl muss nicht unbedingt konstant sein; beispielsweise können in der Antriebseinheit auch verschiedene Drehzahlstufen oder -bereiche für die Benutzung der Werkzeugmaschine vorgesehen sein. Geringe Drehzahlen, die beispielsweise beim Anlauf der Kopplungswelle aus dem Stillstand durchlaufen werden, sollen dagegen nicht unter den Begriff der "rotierenden Kopplungswelle" fallen.

Weiterhin weist die Befestigungs- und Kopplungsvorrichtung eine Spannzange zur lösbaren Aufnahme eines, insbesondere zylindrischen, Werkzeugschaftes auf. Die Spannzange ist durch eine Relativbewegung entlang der Längsachse gegenüber einer mit der Kopplungswelle drehfest, insbesondere einstückig, verbundenen Spannzangenaufnahme zwischen einer Spannstellung, in welcher der Werkzeugschaft in der Spannzange derart eingespannt ist, dass er drehfest mit der Kopplungswelle verbunden und um die Längsachse rotierbar ist, und einer Lösestellung, in welcher der Werkzeugschaft aus der Spannzange entnehmbar bzw. in die Spannzange einsetzbar ist, bewegbar. Die Funktionsweise der Spannzange ist insoweit im Wesentlichen identisch mit der oben beschriebenen Spannzange aus dem Stand der Technik. Im Unterschied zu dieser ist die Relativbewegung der Spannzange gegenüber der Spannzangenaufnahme entlang der Längsachse gemäß der Erfindung jedoch vorzugsweise eine nur geradlinige oder eine im Wesentlichen geradlinige Bewegung, jedoch keine Schraubbewegung. Unter einer im Wesentlichen geradlinigen Bewegung wird dabei eine Bewegung verstanden, die eine geradlinige Bewegung mit einer geringfügigen anderen Bewegung, insbesondere einer Drehbewegung, kombiniert.

Außerdem weist die Befestigungs- und Kopplungsvorrichtung eine Spanneinrichtung auf, welche die Spannzange und die Spannzangenaufnahme aufweist. Die Spanneinrichtung ist dazu eingerichtet, in einem von außen unbelasteten Zustand die Spannstellung der Spannzange aufrechtzuerhalten, die Spannzange bei einer Beaufschlagung der Spanneinrichtung von außen mit einer Lösekraft von der Spannstellung in die Lösestellung zu bewegen und die Spannzange beim Wegfall der Lösekraft von der Lösestellung in die Spannstellung zu bewegen. Die Spanneinrichtung kann neben der Spannzange und der Spannzangenaufnahme auch die Kopplungswelle aufweisen, sodass die Spanneinrichtung unmittelbar mit der Antriebseinheit der Werkzeugmaschine verbunden werden kann.

Dadurch, dass die Spanneinrichtung dazu eingerichtet ist, die Spannstellung der Spannzange in einem von außen unbelasteten Zustand aufrechtzuerhalten, kann die Spanneinrichtung als "autonome Einheit" betrieben werden, ohne dass ein ständiger Kontakt zu weiteren Komponenten außerhalb der Spanneinrichtung zur Aufrechterhaltung der Spannstellung erforderlich wäre. Da die Spannstellung insbesondere im Betrieb der Werkzeugmaschine und damit bei rotierender Kopplungswelle aufrechterhalten werden muss, wäre insbesondere ein solcher ständiger Kontakt zwischen einer mit der Kopplungswelle rotierenden Komponente der Spanneinrichtung und einer nicht mit der Kopplungswelle rotierenden Komponente außerhalb der Spanneinrichtung, über den dann eine erhebliche Kraft zur Aufrechterhaltung der Spannstellung übertragen werden müsste, ungünstig und würde aufgrund der Reibung zu Erwärmung und zu Leistungsverlusten führen.

Außerdem weist die Befestigungs- und Kopplungsvorrichtung eine Löseeinrichtung auf, gegenüber welcher die Kopplungswelle rotierbar ist, d. h. die Löseeinrichtung dreht sich bei rotierender Kopplungswelle nicht mit, sondern ist relativ zu der Werkzeugmaschine im Wesentlichen unbeweglich angeordnet, kann aber selbst auch bewegliche Teile aufweisen. Die Löseeinrichtung ist dazu eingerichtet, bei einer Betätigung der Löseeinrichtung bei stillstehender Kopplungswelle die Spanneinrichtung mit der Lösekraft zu beaufschlagen.

Da der Werkzeugschaft aus Sicherheitsgründen ohnehin nur bei stillstehender Kopplungswelle von der Spannzange gelöst werden darf, stellt es auch keinen Nachteil dar, dass zur Erzeugung der Lösekraft ein Kontakt mit einer Komponente außerhalb der Spanneinrichtung, nämlich der Löseeinrichtung, erforderlich ist.

Schließlich weist die Befestigungs- und Kopplungsvorrichtung eine Betätigungseinrichtung auf, welche durch den Benutzer der Werkzeugmaschine, insbesondere durch Handkraft, betätigbar und dazu eingerichtet ist, die Löseeinrichtung zu betätigen sowie die Betätigung der Löseeinrichtung zu beenden. Indem der Benutzer die Betätigungseinrichtung betätigt, kann er somit über die Löseeinrichtung die Spannzange in die Lösestellung bringen, um einen Werkzeugwechsel und/oder einen Wechsel der Spannzange vorzunehmen, und eine Spannzange in die Spannstellung bringen, um das rotierende Werkzeug zu befestigen und die Werkzeugmaschine damit zu benutzen.

Das Befestigen und das Lösen des Werkzeugs an der bzw. von der Werkzeugmaschine erfolgt damit auf einfache Weise nur durch Betätigen der Betätigungseinrichtung, insbesondere durch Handkraft. Da die Betätigungseinrichtung eine Untereinheit der Befestigungs- und Kopplungsvorrichtung und somit ein Teil der Werkzeugmaschine ist, ist hierfür kein separates Werkzeug erforderlich. Damit wird die der Erfindung zugrunde liegende Aufgabe gelöst.

In einer bevorzugten Ausführung der Erfindung weist die Spanneinrichtung wenigstens ein vorgespanntes Federelement zur Aufrechterhaltung der Spannstellung der Spannzange in dem von außen unbelasteten Zustand auf. Dies stellt eine einfache konstruktive Möglichkeit dar, um die Kraft zur Aufrechterhaltung der Spannstellung zu erzeugen, ohne dass es hierfür eines ständigen Kontaktes zu weiteren Komponenten außerhalb der Spanneinrichtung bedarf.

Vorzugsweise rotiert die gesamte Spanneinrichtung mit der Kopplungswelle mit und verursacht somit im Betrieb der Werkzeugmaschine keine Lagerbelastung. Es ist jedoch auch denkbar, dass das vorgespannte Federelement nicht mitrotiert und sich auf einer Seite beispielsweise an einem Gehäuse der Befestigungs- und Kopplungsvorrichtung und auf der anderen Seite an einem Axiallager abstützt, wobei die Federkraft zur Aufrechterhaltung der Spannstellung der Spannzange dann über das Axiallager übertragen wird.

In einer bevorzugten Variante dieser Ausführung ist die Spanneinrichtung dazu eingerichtet, die Spannzange durch eine durch die Vorspannung des wenigstens einen vorgespannten Federelements erzeugte Rückstellkraft in die Spannzangenaufnahme hineinzuziehen. Dieses Hineinziehen stellt dann die geforderte Relativbewegung der Spannzange entlang der Längsachse gegenüber der Spannzangenaufnahme dar. Die Bewegung erfolgt vorzugsweise in Richtung des inneren Endes der Spannzange, wodurch an der Spannzange angeordnete Zungen in der oben beschriebenen Weise durch die Keilwirkung zweier ineinander angeordneter konischer Flächen der Spannzange bzw. der Spannzangenaufnahme nach radial innen gepresst werden und den Werkzeugschaft festklemmen. Auf diese Weise können im Wesentlichen die gleiche Spannzange und die gleiche Spannzangenaufnahme wie im Stand der Technik verwendet werden, was den Aufwand für die technische Umsetzung der Erfindung reduziert.

In einer bevorzugten Variante der zuletzt beschriebenen Variante weist die Spanneinrichtung einen Zugstab zur Übertragung der Zugkraft von dem wenigstens einen vorgespannten Federelement auf die Spannzange auf, und die Spannzange ist mit dem Zugstab, insbesondere durch eine Schraubverbindung oder eine Bajonettverbindung, lösbar verbunden. Dies kann wieder bewirken, dass die gleiche Spannzange wie im Stand der Technik verwendet werden kann, insbesondere dann, wenn die bekannte Spannzange - wie oben beschrieben - in die Spannzangenaufnahme einschraubbar ist und nun stattdessen mit dem hierfür vorgesehenen Gewinde mit dem Zugstab verschraubt wird. Außerdem kann bei einer Schraubverbindung zwischen Spannzange und Zugstab die auf die Spannzange wirkende Zugkraft über das Schraubgewinde stufenlos eingestellt werden. Auch bei Verwendung einer anderen Verbindungstechnik, beispielsweise einer Bajonettverbindung, sind die an der bekannten Spannzange erforderlichen Modifikationen sehr gering. Weiterhin hat diese Variante den Vorteil, dass die Spannzange, beispielsweise im Falle ihrer Beschädigung oder wenn ein rotierendes Werkzeug mit einem anderen Schaftdurchmesser eingespannt werden soll, separat ausgetauscht werden kann.

In einer weiteren bevorzugten Variante der zuletzt beschriebenen Ausführung ist das wenigstens eine vorgespannte Federelement wenigstens eine Tellerfeder, vorzugsweise ein Stapel aus einer Mehrzahl von Tellerfedern. Da eine einzelne Tellerfeder eine sehr hohe Federkraft erzeugen kann, lässt sich insbesondere durch einen Stapel aus einer Mehrzahl von Tellerfedern bei einem um die Anzahl der Tellerfedern in dem Stapel vervielfachten Federweg ebenfalls noch eine hohe Federkraft erreichen. Eine derartige hohe Federkraft ist auch erforderlich, um eine hinreichend feste und damit sichere Verspannung des Werkzeugschaftes in der Spannzange zu erreichen.

In einer weiteren bevorzugten Variante der zuletzt beschriebenen Ausführung ist die Löseeinrichtung dazu eingerichtet, die Spanneinrichtung bei stillstehender Kopplungswelle derart mit der Lösekraft zu beaufschlagen, dass diese der durch die Vorspannung des wenigstens einen vorgespannten Federelements erzeugten Rückstellkraft entgegenwirkt. Dies stellt wiederum eine einfache konstruktive Möglichkeit dar, die Lösekraft zu erzeugen.

In einer weiteren bevorzugten Ausführung der Erfindung weist die Spanneinrichtung weiterhin eine Löseverhinderungseinrichtung auf, welche dazu eingerichtet ist, zu verhindern, dass die Spanneinrichtung bei rotierender Kopplungswelle mit der Lösekraft beaufschlagt wird. Wie bereits erwähnt, darf der Werkzeugschaft aus Sicherheitsgründen nur bei stillstehender Kopplungswelle von der Spannzange gelöst werden. Ein Lösen des Werkzeugschaftes von der Spannzange bei rotierender Kopplungswelle könnte dazu führen, dass das rotierende Werkzeug unkontrolliert von der Werkzeugmaschine getrennt wird, während es durch seine Rotation eine erhebliche kinetische Energie aufweist. Dies könnte zu Beschädigungen an dem gerade bearbeiteten Werkstück, an dem rotierenden Werkzeug selbst oder an der Werkzeugmaschine oder im schlimmsten Fall zu Verletzungen des Benutzers der Werkzeugmaschine führen und muss daher unbedingt verhindert werden. Die Löseverhinderungseinrichtung sorgt somit gerade dafür, dass diese Sicherheitsanforderung erfüllt wird.

In einer bevorzugten Variante dieser Ausführung ist die Löseverhinderungseinrichtung gegenüber der Kopplungswelle drehfest angeordnet und weist wenigstens ein Fliehgewicht auf. Die Löseeinrichtung ist derart angeordnet, dass die Beaufschlagung der Spanneinrichtung mit der Lösekraft bei einer Betätigung der Löseeinrichtung bei stillstehender Kopplungswelle durch einen Kontakt und eine Übertragung der Lösekraft in Richtung der Längsachse zwischen wenigstens einem ersten Kontaktpunkt auf dem wenigstens einen Fliehgewicht und wenigstens einem zweiten Kontaktpunkt auf der Löseeinrichtung erfolgt. Das wenigstens eine Fliehgewicht ist nach radial innen vorgespannt, und der wenigstens eine erste Kontaktpunkt ist bei rotierender Kopplungswelle durch die Fliehkraft derart nach radial außen bewegbar, dass bei einer Betätigung der Löseeinrichtung bei rotierender Kopplungswelle kein Kontakt zwischen dem wenigstens einen ersten Kontaktpunkt und dem wenigstens einen zweiten Kontaktpunkt und damit auch keine Übertragung der Lösekraft stattfinden kann. Die Verhinderung der Übertragung der Lösekraft von der Löseeinrichtung auf die Spanneinrichtung bei rotierender Kopplungswelle wird somit ausschließlich über die Fliehkraft gesteuert, welche bei rotierender Kopplungswelle von selbst auftritt. Diese technische Realisierung der Löseverhinderungseinrichtung hat den Vorteil, dass sie ohne eine, insbesondere elektrische oder elektronische Steuerung mit Sensoren und/oder Aktuatoren auskommt, sondern lediglich mechanische Bauteile verwendet, und daher zuverlässig und wartungsfrei ist.

In einer Variante der zuletzt beschriebenen Ausführung weisen das wenigstens eine Fliehgewicht im Bereich des wenigstens einen ersten Kontaktpunktes und die Löseeinrichtung im Bereich des wenigstens einen zweiten Kontaktpunktes jeweils gegenüber einer senkrecht auf der Längsachse stehenden Ebene wenigstens einen Vorsprung und/oder wenigstens eine Vertiefung auf, welche derart angeordnet sind, dass das wenigstens eine Fliehgewicht bei einem Kontakt und einer Übertragung der Lösekraft zwischen dem wenigstens einen ersten Kontaktpunkt und dem wenigstens einen zweiten Kontaktpunkt und bei einem Anlauf der Kopplungswelle aus dem Stillstand nach radial außen bewegbar ist, wodurch kein Kontakt mehr zwischen dem wenigstens einen ersten Kontaktpunkt und dem wenigstens einen zweiten Kontaktpunkt und damit auch keine Übertragung einer Lösekraft mehr stattfinden kann. Auf diese Weise wird sichergestellt, dass, wenn die Löseeinrichtung betätigt ist, beim Anlaufen der Kopplungswelle die Betätigung der Löseeinrichtung beendet wird. Somit wird sichergestellt, dass beim Anlaufen der Kopplungswelle, wenn sich die Spannzange in der Lösestellung befindet, eine sichere Befestigung des Werkzeugs hergestellt wird. Auch dies muss aus Sicherheitsgründen gewährleistet sein, da es sonst auch in dieser Situation geschehen könnte, dass das rotierende Werkzeug bei rotierender Kopplungswelle unkontrolliert von der Werkzeugmaschine getrennt wird.

In einer weiteren bevorzugten Ausführung der Erfindung ist die Betätigungseinrichtung dazu eingerichtet, eine durch den Benutzer ausgeführte, zur Längsachse koaxiale Drehbewegung eines Betätigungselements in eine Bewegung entlang der Längsachse zur Betätigung der Löseeinrichtung umzuwandeln. Insbesondere kann mit einem Drehgriff als Betätigungselement eine Drehbewegung um einen sehr großen Winkel realisiert werden, ohne dass der Drehgriff große Abmessungen haben muss bzw. einen großen Bauraum an der Werkzeugmaschine erfordert, da der Drehgriff einfach um die Befestigungs- und Kopplungsvorrichtung herum und insbesondere koaxial zu der Längsachse angeordnet werden kann. Eine Drehbewegung um einen großen Winkel ermöglicht es wiederum, das zur Betätigung des Drehgriffs erforderliche Drehmoment, welches der Benutzer insbesondere durch Handkraft aufbringen muss, zu verringern. Eine solche Drehbewegung zur Betätigung der Betätigungseinrichtung steigert somit den Bedienungskomfort beim Werkzeugwechsel.

In einer bevorzugten Variante der zuletzt beschriebenen Ausführung erfolgt die Umwandlung der Drehbewegung in die Bewegung entlang der Längsachse durch ein Keilgetriebe. Dies stellt eine einfache konstruktive Möglichkeit dar, um die Umwandlung der Bewegung zu erreichen. Insbesondere kann mit einem Keilgetriebe auch eine Kraftübersetzung erzielt werden, sodass eine Drehbewegung des Betätigungselements über einen großen Winkel mit einem geringen Drehmoment in eine Bewegung entlang der Längsachse über einen kleineren Weg, jedoch mit einer entsprechend höheren Kraft umgewandelt werden kann.

In einer bevorzugten Variante der zuletzt beschriebenen Variante weist das Keilgetriebe wenigstens eine Kulissennut mit wenigstens einem gegenüber einer senkrecht auf der Längsachse stehenden Ebene schräg verlaufenden Abschnitt und wenigstens einem in der Kulissennut verschiebbaren Kulissenfolger auf. Dabei ist die Kulissennut relativ zu der Werkzeugmaschine unbeweglich und der Kulissenfolger um die Längsachse drehbar angeordnet oder umgekehrt. Das Keilgetriebe wird in diesem Fall realisiert durch den schräg verlaufenden Abschnitt der Kulissennut in Verbindung mit dem Kulissenfolger, welcher bei einer Bewegung in der Kulissennut auch in Richtung der Längsachse verschoben wird. Die Kraftübersetzung des Keilgetriebes kann dann auf einfache Weise durch die Wahl der Neigung des schräg verlaufenden Abschnitts der Kulissennut festgelegt werden.

In einer zu der zuletzt beschriebenen Variante alternativen Variante weist das Keilgetriebe zwei einander in der Längsrichtung gegenüberliegende Flächen auf, von denen wenigstens eine einen gegenüber einer senkrecht auf der Längsachse stehenden Ebene schräg verlaufenden Abschnitt aufweist. Dabei ist genau eine der beiden Flächen um die Längsachse drehbar und genau eine der beiden Flächen entlang der Längsachse verschiebbar angeordnet, und zwischen den beiden Flächen ist wenigstens ein Wälzkörper, insbesondere wenigstens eine Kugel, angeordnet. Die um die Längsachse drehbare und die entlang der Längsachse verschiebbare Fläche können dieselbe Fläche oder auch verschiedene Flächen sein. In einer konstruktiven Ausführung sind die beiden Flächen vorzugsweise die axialen Stirnflächen zweier Ringe, die koaxial zu der Längsachse angeordnet sind, wobei der Ring mit der um die Längsachse drehbaren Fläche mit dem Betätigungselement starr verbunden ist und der Ring mit der entlang der Längsachse verschiebbaren Fläche mit der Löseeinrichtung verbunden ist, um diese zu betätigen.

Das Keilgetriebe wird in diesem Fall realisiert durch den schräg verlaufenden Abschnitt von wenigstens einer der beiden Flächen in Verbindung mit dem wenigstens einen Wälzkörper, wodurch sich beim Abwälzen des wenigstens einen Wälzkörpers auf dem schräg verlaufenden Abschnitt der einen Fläche der axiale Abstand zwischen den beiden Flächen ändert. Durch das Drehen der drehbaren der beiden Flächen wird dann über das Keilgetriebe die entlang der Längsachse verschiebbare der beiden Flächen entsprechend axial bewegt. Die Kraftübersetzung des Keilgetriebes kann dann auf einfache Weise durch die Wahl der Neigung des schräg verlaufenden Abschnitts von wenigstens einer der beiden Flächen festgelegt werden.

Diese Variante hat gegenüber der zuvor beschriebenen Variante mit der Kulissennut und dem Kulissenfolger den Vorteil, dass die Bauteile, an denen die beiden Flächen angeordnet sind, also insbesondere die beiden Ringe, separat und damit aus einem harten Material, insbesondere aus Stahl, hergestellt werden können. Demgegenüber kann das Material des Bauteils, in das die Kulissennut eingebracht wird, aufgrund der Konstruktion der Befestigungs- und Kopplungsvorrichtung vorgegeben sein. Beispielsweise muss dieses Bauteil aus Gewichtsgründen aus Aluminium gefertigt sein. Aluminium ist jedoch deutlich weicher als Stahl, sodass die Bewegung des Kulissenfolgers, welcher aus Festigkeitsgründen dagegen aus Stahl gefertigt sein soll, die Kulissennut eindrücken, ausweiten oder beschädigen kann. Wenn die beiden Komponenten, die das Keilgetriebe bilden - wie in der vorliegenden Variante die beiden Flächen und der wenigstens eine Wälzkörper - dagegen beide aus Stahl sind, besteht diese Gefahr nicht.

Die Erfindung betrifft weiterhin eine Werkzeugmaschine mit einer Antriebseinheit und einer mit der Antriebseinheit verbundenen, erfindungsgemäßen Befestigungs- und Kopplungsvorrichtung.

In einer bevorzugten Ausführung weist die erfindungsgemäße Werkzeugmaschine einen Sensor, insbesondere einen Lagesensor, auf, welcher dazu eingerichtet ist, eine Betätigung der Löseeinrichtung zu detektieren, sowie eine Antriebssteuerung, welche dazu eingerichtet ist, die Antriebseinheit so zu steuern, dass ein Anlauf der Kopplungswelle aus dem Stillstand bei betätigter Löseeinrichtung verhindert wird. Der Sensor detektiert hierbei insbesondere eine axiale Stellung einer Komponente der Löseeinrichtung, welche die Spanneinrichtung mit der Lösekraft beaufschlagt, und daraus eine Betätigung der Löseeinrichtung. Dies stellt eine alternative Lösung für das Problem dar, dass ein Anlauf der Kopplungswelle aus dem Stillstand bei betätigter Löseeinrichtung aus Sicherheitsgründen verhindert werden muss. Während die weiter oben beschriebene Lösung rein mechanisch durch jeweils wenigstens einen Vorsprung und/oder wenigstens eine Vertiefung auf dem wenigstens einen Fliehgewicht und an der Löseeinrichtung erfolgte, verwendet die vorliegende Lösung eine, vorzugsweise elektrische oder elektronische Antriebssteuerung in der Werkzeugmaschine. Diese ist gegenüber der mechanischen Lösung kostengünstiger, insbesondere wenn dafür eine ohnehin vorhandene Antriebssteuerung nur zusätzlich mit der Funktion gemäß der vorliegenden Ausführung ausgestattet zu werden braucht.

In einer zu der zuletzt beschriebenen Variante alternativen Variante weist die Antriebseinheit einen Elektromotor, einen Stromsensor zur Detektion des Motorstromes und eine Antriebssteuerung auf, welche dazu eingerichtet ist, aus der Detektion des Motorstromes beim Anlauf der Kopplungswelle aus dem Stillstand eine Betätigung der Löseeinrichtung zu detektieren und die Antriebseinheit so zu steuern, dass ein Anlauf der Kopplungswelle aus dem Stillstand bei betätigter Löseeinrichtung verhindert wird. Dies stellt eine weitere alternative Lösung für das Problem dar, dass ein Anlauf der Kopplungswelle aus dem Stillstand bei betätigter Löseeinrichtung aus Sicherheitsgründen verhindert werden muss. Diese Lösung macht sich die Tatsache zunutze, dass bei einer betätigten Löseeinrichtung von der Lösekraft beim Anlauf der Kopplungswelle eine hohe Reibung zwischen der Löseeinrichtung und der Spanneinrichtung und damit ein großer auf die Kopplungswelle wirkender mechanischer Widerstand erzeugt wird, welcher durch eine größere elektrische Leistung des Elektromotors überwunden werden muss. Dies lässt wiederum den Motorstrom ansteigen, was durch den Stromsensor detektiert werden kann. Die Vorteile dieser Variante ergeben sich analog zu der zuvor beschriebenen Variante, wobei sich der zusätzliche Vorteil ergibt, dass der Stromsensor direkt in die Antriebssteuerung integriert werden kann und somit keinen zusätzlichen Bauraum und keine Verkabelung zwischen der Antriebssteuerung, welche im Allgemeinen in der Antriebseinheit untergebracht ist, und einem Sensor in der Befestigungs- und Kopplungsvorrichtung erforderlich ist.

Weitere Vorteile, Merkmale und Anwendungsmöglichkeiten der vorliegenden Erfindung ergeben sich aus der nachfolgenden Beschreibung in Zusammenhang mit den Figuren.

Dabei zeigt:
- Fig. 1: eine erfindungsgemäße Werkzeugmaschine von oben;
- Fig. 2: eine erste Ausführungsform einer erfindungsgemäßen Befestigungs- und Kopplungsvorrichtung in einer perspektivischen Explosionsdarstellung;
- Fig. 3: die erste Ausführungsform in einer Seitenansicht, wobei der Drehgriff und das Halslager entfernt wurden;
- Fig. 4: eine Schnittdarstellung der ersten Ausführungsform bei stillstehender Kopplungswelle;
- Fig. 5: eine Schnittdarstellung der ersten Ausführungsform bei rotierender Kopplungswelle;
- Fig. 6: die Löseverhinderungseinrichtung der ersten Ausführungsform bei stillstehender Kopplungswelle;
- Fig. 7: die Löseverhinderungseinrichtung der ersten Ausführungsform bei rotierender Kopplungswelle;
- Fig. 8: eine alternative Ausführung der Löseverhinderungseinrichtung der ersten Ausführungsform bei stillstehender Kopplungswelle;
- Fig. 9: einen Steigungsring der Betätigungseinrichtung der ersten Ausführungsform;
- Fig. 10: die Betätigungseinrichtung der ersten Ausführungsform;
- Fig. 11: eine zweite Ausführungsform einer erfindungsgemäßen Befestigungs- und Kopplungsvorrichtung in einer perspektivischen Explosionsdarstellung.

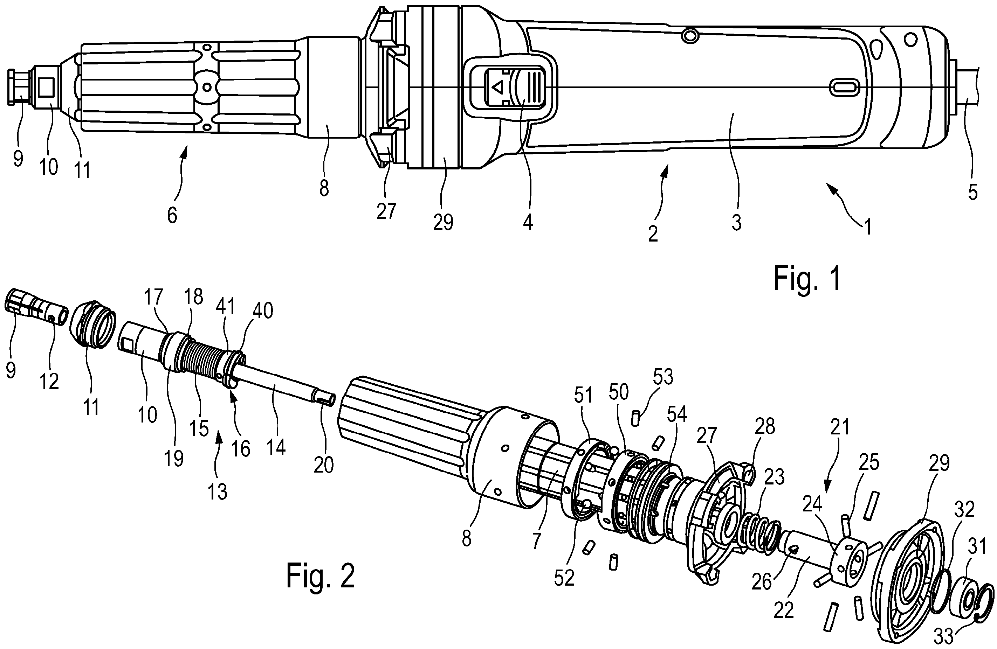

Fig. 1 zeigt eine erfindungsgemäße Werkzeugmaschine 1, hier am Beispiel eines Geradschleifers. Die Fig. 2 bis 10 zeigen eine erste Ausführungsform einer erfindungsgemäßen Befestigungs- und Kopplungsvorrichtung 6 und werden daher im Folgenden gemeinsam beschrieben.

Die Werkzeugmaschine 1 weist als Hauptkomponenten eine Antriebseinheit 2 mit einem (nicht dargestellten) Elektromotor und die Befestigungs- und Kopplungsvorrichtung 6 auf. Da es sich bei der Werkzeugmaschine 1 um einen Geradschleifer handelt, sind alle Komponenten des Antriebsstrangs entlang einer Längsachse der Werkzeugmaschine 1 angeordnet.

Die Antriebseinheit 2 weist ein Gehäuse 3, einen Schalter 4 zum Ein- und Ausschalten des Elektromotors sowie ein Kabel 5 für den Netzanschluss der Werkzeugmaschine 1 auf. Die weiteren Bauteile der Antriebseinheit 2 wie ein Getriebe, ein Lüfter oder ein Netzteil sind für die vorliegende Erfindung nicht relevant und werden daher nicht beschrieben.

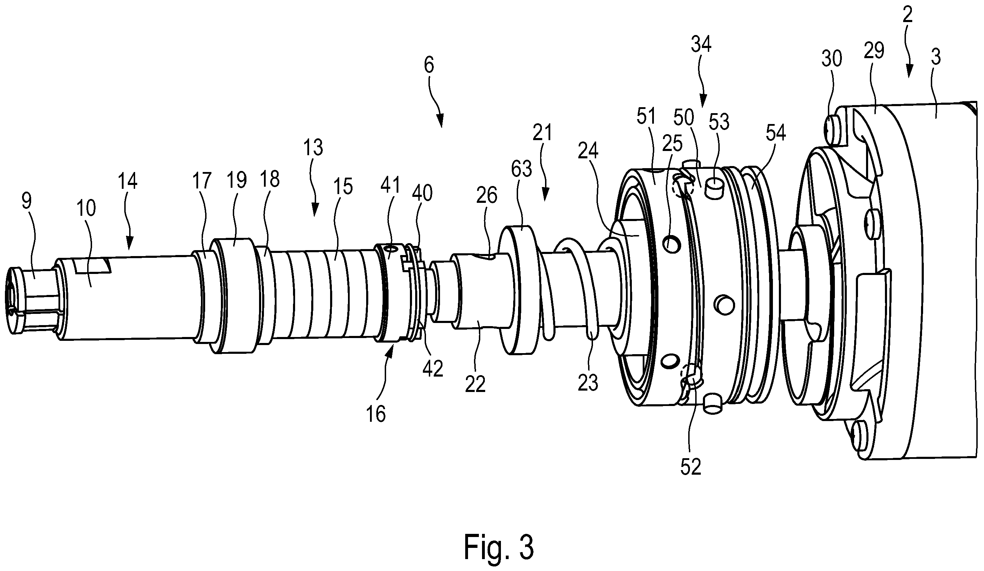

Die Befestigungs- und Kopplungsvorrichtung 6 ist an der Stirnseite der Antriebseinheit 2 angeflanscht und bildet den Hals der Werkzeugmaschine 1. Das Gehäuse der Befestigungs- und Kopplungsvorrichtung 6 wird von einem durchgehenden Halslager 7 gebildet, welches einen Flansch 27 aufweist, der mittels Schrauben 30 und entsprechenden Schraubenöffnungen 28 (siehe Fig. 2 und 3) an einen stirnseitigen Deckel 29 der Antriebseinheit 2 angeschraubt ist.

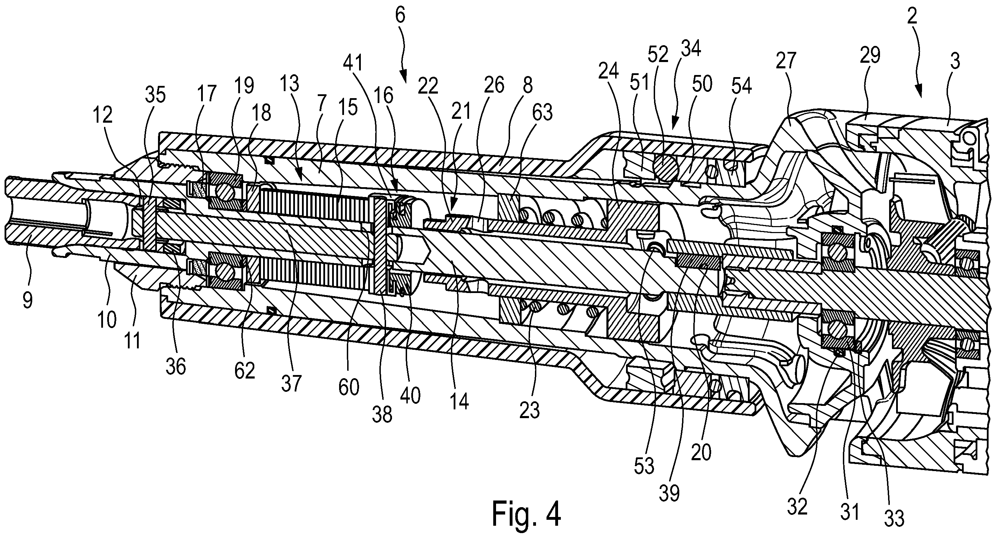

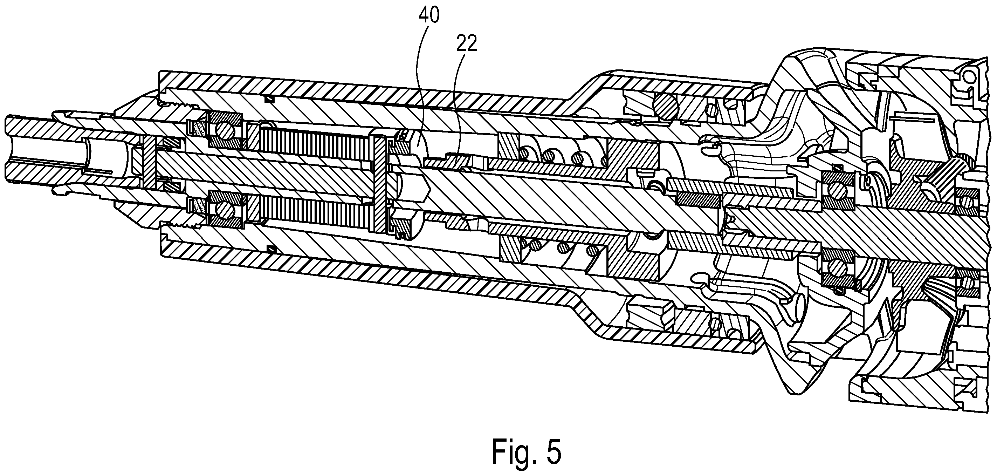

Das Halslager 7 weist weiterhin einen leicht konischen Abschnitt kleineren Durchmessers auf, welcher von einem in einem äußeren Abschnitt ebenfalls leicht konischen und in einem inneren Abschnitt zylindrischen Drehgriff 8 umgeben ist. An dem äußeren Ende des Drehgriffs 8 ragen eine Spannzange 9 und eine Spannzangenaufnahme 10 über das Halslager 7 und den Drehgriff 8 hinaus. Diese sind, neben einer Kopplungswelle 14 und weiteren Komponenten, Teil einer Spanneinrichtung 13 (siehe Fig. 2 bis 5), welche im Inneren des Halslagers 7 angeordnet ist und im Folgenden noch ausführlich beschrieben wird. Die Spanneinrichtung 13 wird - bis auf die genannten, herausragenden Teile - durch eine Schutzhülse 11 gegen Staub und Fremdkörper geschützt, welche in ein Gewinde am äußeren Ende des Halslagers 7 eingeschraubt ist und dieses verschließt (siehe Fig. 4 und 5).

Die Spannzange 9 dient zur Aufnahme eines, im Ausführungsbeispiel zylindrischen, Werkzeugschaftes (nicht dargestellt). Die Spannzange 9 ist an ihrem äußeren Ende mehrfach parallel zur Längsachse der Werkzeugmaschine 1 geschlitzt, wodurch mehrere Zungen gebildet sind. Die Spannzange 9 weist einen Abschnitt mit einer konischen Außenfläche auf, welche in einen entsprechenden Abschnitt der Spannzangenaufnahme 10 mit einer konischen Innenfläche eingesetzt ist. Wird die Spannzange 9 axial in Richtung der Spannzangenaufnahme 10 bewegt, so werden die beiden konischen Flächen somit ineinandergeschoben. Dadurch werden die Zungen der Spannzange 9 nach radial innen gepresst und somit der in die Spannzange 9 eingesetzte Werkzeugschaft festgeklemmt. Die Spannzange 9 hat dieselbe Funktionsweise wie eine Spannzange aus dem Stand der Technik. Insoweit wird auf die obige Beschreibung einer solchen bekannten Spannzange verwiesen.

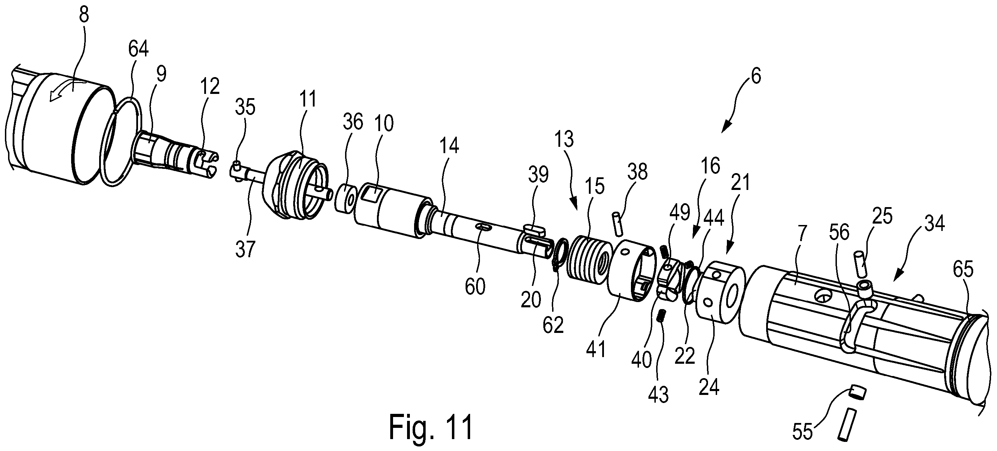

Die Spannzange 9 ist an ihrem inneren Ende mit einer Bajonettfassung 12 versehen, mittels derer sie durch eine kombinierte Steck- und Drehbewegung in einen Stift 35 eingehängt werden kann, welcher durch eine radiale Bohrung am Ende eines Zugstabes 37 durchgesteckt ist und auf beiden Seiten über die Bohrung hervorsteht (siehe Fig. 4 bzw. (identisch in der zweiten Ausführungsform) Fig. 11). Durch die Bajonettfassung 12 wird die Spannzange 9 koaxial und drehfest mit dem Zugstab 37 verbunden.

Die Bajonettfassung 12 ist so ausgebildet, dass zum Ein- und Aushängen der Spannzange 9 in den bzw. aus dem Stift 35 eine leichte Überhöhung zu überwinden ist. Auf diese Weise wird verhindert, dass sich die Spannzange 9 unbeabsichtigt von der Spannzangenaufnahme 10 löst, wenn die Spannzange 9 gespannt ist und somit selbst unter einer Zugspannung steht, insbesondere während des Betriebs der Werkzeugmaschine 1.

Damit die Spannzange 9 im gelösten Zustand, wenn sie nicht unter einer Zugspannung steht, sich dennoch nicht drehen und aus der Spannzangenaufnahme 10 herausfallen kann, ist sie durch ein Federelement, im Ausführungsbeispiel ein Elastomerelement 36, leicht nach außen vorgespannt. Das Elastomerelement 36 ist im inneren, geschlossenen Ende der Spannzangenaufnahme 10 angeordnet. Seine Rückstellkraft drückt die Spannzange 9 von der Spannzangenaufnahme 10 und damit von dem Stift 35 weg und hält die Bajonettverbindung somit im geschlossenen Zustand. Die Rückstellkraft des Elastomerelements 36 kann vom Benutzer der Werkzeugmaschine 1 jedoch leicht mit der Hand überwunden werden, um die Spannzange ohne Werkzeug auszuwechseln, wenn beispielsweise eine Spannzange mit einem anderen Innendurchmesser benötigt wird.

Die Spannzange 9, die Spannzangenaufnahme 10, die Kopplungswelle 14 sowie der Zugstab 37 sind Teil einer Spanneinrichtung 13 (siehe Fig. 2 bis 5). Die Spannzangenaufnahme 10 ist dabei mit der Kopplungswelle 14 verbunden und bildet deren äußeres Ende. Die Verbindung zwischen der Spannzangenaufnahme 10 und der Kopplungswelle 14 kann einstückig, nahtlos oder stoffschlüssig erfolgen. Die Kopplungswelle 14 ist weiterhin in ihrem äußeren Teil als Hohlwelle ausgeführt, um in ihrem Inneren den Zugstab 37 axial verschiebbar aufzunehmen.

Die Kopplungswelle 14 ist an ihrem inneren Ende über eine Keilverbindung mittels einer Längsnut 20 (siehe Fig. 2) und eines Keils 39 (siehe Fig. 11 für die identische Keilverbindung in der zweiten Ausführungsform) mit einer Abtriebswelle (nicht dargestellt) eines Elektromotors in der Antriebseinheit 2 drehmomentübertragend verbunden. Die Abtriebswelle des Elektromotors ist in der Antriebseinheit 2 durch ein Wälzlager 31 gelagert, welches durch einen Dichtungsring 32 abgedichtet ist, sowie durch einen Sicherungsring 33 gesichert.

Die Spanneinrichtung 13 bewirkt, dass die Spannzange 9 auch ohne Krafteinwirkung von außen gespannt bleibt, um einen Werkzeugschaft festzuklemmen. Zu diesem Zweck weist die Spanneinrichtung 13 weiterhin ein Tellerfederpaket 15 mit (im Ausführungsbeispiel vierundzwanzig) Tellerfedern auf, welche als Stapel koaxial um die Kopplungswelle 14 herum angeordnet sind. An seinem äußeren Ende stützt sich das Tellerfederpaket 15 über einen Wuchtring 18 an einem Sicherungsring 62 ab, welcher in eine Nut auf der Kopplungswelle 14 eingesteckt ist. Der Wuchtring ist weiterhin derart justiert, dass etwaige Unwuchten auf der Kopplungswelle 14, welche insbesondere durch die übrigen Komponenten der Spanneinrichtung 13 verursacht werden, weitgehend ausgeglichen werden. An seinem inneren Ende stützt sich das Tellerfederpaket 15 an der äußeren Stirnseite eines Fliehgewichtträgers 41 einer Löseverhinderungseinrichtung 16 ab, welche weiter unten noch näher beschrieben wird. Der Fliehgewichtträger 41 ist mit einer inneren Bohrung ebenfalls koaxial auf der Kopplungswelle 14 angeordnet. Durch radiale, sich gegenüberliegende Öffnungen 46 in dem Fliehgewichtträger 41 ist ein Stift 38 durchgesteckt, welcher in der inneren Bohrung des Fliehgewichtträgers 41 durch Langlöcher 60 in der Kopplungswelle 14 hindurchführt, wodurch der Fliehgewichtträger 41 mit der Kopplungswelle 14 drehfest, aber axial verschiebbar verbunden ist. Radial ganz innen ist der Stift 38 außerdem durch eine radiale Bohrung im Zugstab 37 durchgesteckt und bildet auf diese Weise eine starre Verbindung zwischen dem Fliehgewichtträger 41 und dem Zugstab 37. Der Zugstab 37 wird somit durch die der Vorspannung des Tellerfederpakets 15 entgegenwirkende Rückstellkraft nach innen gezogen, wodurch die Spannstellung der Spannzange 9 aufrechterhalten wird.

Die Spanneinrichtung 13 wirkt somit infolge der Vorspannung des Tellerfederpakets 15 wie eine "autonome Einheit", was bedeuten soll, dass sie ohne eine Krafteinwirkung von außen, insbesondere auch dann, wenn sie mit der Kopplungswelle 14 mitrotiert, die Spannstellung der Spannzange 9 aufrechterhält.

Die Spanneinrichtung 13 wird durch ein Wälzlager 19 nach radial außen gegen die Innenseite des Halslagers 7 abgestützt. Das Wälzlager 19 ist auf der Kopplungswelle 14 zwischen einer Radialschulter am inneren Ende der Spannzangenaufnahme 10 und dem bereits beschriebenen Sicherungsring 62 angeordnet. Außerhalb des Wälzlagers 19 ist noch ein Filzring 17 auf der Kopplungswelle 14 angeordnet, welcher als Staubschutz gegen das Eindringen beispielsweise von Schleifstaub, welcher das Wälzlager 19 und die übrigen Komponenten im Inneren des Halslagers 7 verschmutzen und beschädigen könnte, von außen durch die Schutzhülse 11 dient.

Für den Werkzeugwechsel muss an der Werkzeugmaschine 1 eine Möglichkeit vorgesehen sein, die Spanneinrichtung 13 von ihrer Spannstellung in ihre Lösestellung zu überführen, um die Spannzange 9 zu öffnen und das Entnehmen bzw. das Einsetzen eines Werkzeugschaftes zu ermöglichen. Zu diesem Zweck dienen eine Löseeinrichtung 21 sowie eine Betätigungseinrichtung 34, durch welche der Bediener der Werkzeugmaschine 1 die Löseeinrichtung 21 betätigen kann. Beide werden im Folgenden ausführlich beschrieben.

Die Betätigungseinrichtung 34 weist als Betätigungselement für den Benutzer der Werkzeugmaschine 1 den Drehgriff 8 auf, welcher aufgrund seiner Länge von dem Benutzer mit einer Hand ganz umfasst und gedreht werden kann, während er die Werkzeugmaschine 1 mit der anderen Hand an der Antriebseinheit 2 festhält. Im Ausführungsbeispiel dreht der Benutzer beim Werkzeugwechsel den Drehgriff 8, zum äußeren Ende hin gesehen, gegen den Uhrzeigersinn, um die Löseeinrichtung 21 zu betätigen, und im Uhrzeigersinn, um die Betätigung der Löseeinrichtung 21 zu beenden. Selbstverständlich können jedoch auch Drehungen im jeweils entgegengesetzten Drehsinn vorgesehen werden.

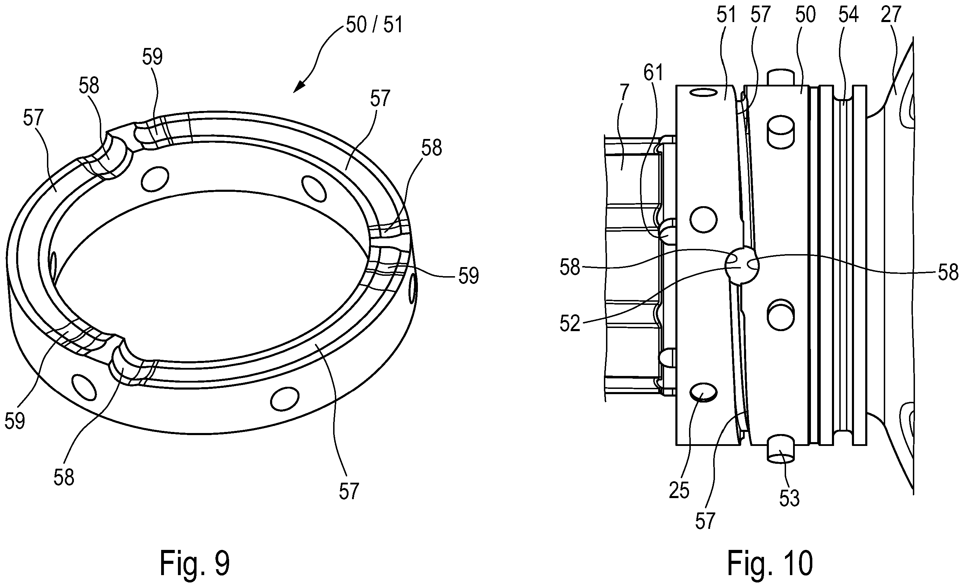

Der Drehgriff 8 weist an seinem inneren Ende einen Abschnitt mit größerem Durchmesser auf. Radial zwischen diesem Abschnitt und dem Halslager 7 sind koaxial zur Längsachse der Werkzeugmaschine 1 als wesentliche Komponenten der Betätigungseinrichtung 34 ein erster Steigungsring 50 und ein zweiter Steigungsring 51 angeordnet sowie ein Axiallager 54. Das Axiallager 54 stützt die von der Betätigungseinrichtung 34 erzeugten und nach innen, d. h. in Richtung der Antriebseinheit 2, wirkenden Reaktionskräfte gegenüber dem Halslager 7 ab. Die Komponenten der Betätigungseinrichtung 34 sind insbesondere in Fig. 9 und 10 detailliert dargestellt.

Der erste Steigungsring 50 ist durch radial nach außen gerichtete Stifte 53 mit dem Drehgriff 8 starr verbunden und somit gegenüber dem Halslager 7 drehbar, aber nicht axial verschiebbar angeordnet. Statt der Stifte 53 können alternativ auch Schrauben eingesetzt werden. Der zweite Steigungsring 51 weist radial nach innen gerichtete Stifte 25 auf, welche innerhalb des zweiten Steigungsrings 51 durch Langlöcher 61 im Halslager 7 hindurchgeführt sind, und ist somit gegenüber dem Halslager 7 nicht drehbar, aber axial verschiebbar angeordnet.

Der erste und der zweite Steigungsring 50, 51 sind im Ausführungsbeispiel baugleich hergestellt, was die Entwicklungs- und Fertigungskosten der Befestigungs- und Kopplungsvorrichtung 6 senkt. Die Steigungsringe 50, 51 weisen an ihren einander gegenüberliegenden Stirnflächen jeweils eine Mehrzahl von (im Ausführungsbeispiel jeweils drei) gleich langen Kugellaufbahnen 57 auf. Auf je zwei sich gegenüberliegenden Kugellaufbahnen 57 auf dem ersten bzw. auf dem zweiten Steigungsring 50, 51 kann eine Kugel 52 gleichzeitig abwälzen, welche zwischen den beiden Steigungsringen 50, 51 angeordnet ist. An jeweils einem Ende einer jeden Kugellaufbahn 57 ist eine erste Rastkerbe 58 in Form einer Vertiefung der Kugellaufbahn 57 und am jeweils anderen Ende einer jeden Kugellaufbahn 57 eine zweite Rastkerbe 59 ebenfalls in Form einer Vertiefung der Kugellaufbahn 57 angeordnet, wobei die erste Rastkerbe 58 jeweils tiefer ist als die zweite Rastkerbe 59. Dadurch, dass die Kugellaufbahnen 57 gleich lang und somit gleichmäßig über den Umfang der Stirnseiten der beiden Steigungsringe 50, 51 verteilt sind, liegen entweder alle Kugeln 52 gleichzeitig in den ersten Rastkerben 58, oder alle Kugeln 52 liegen gleichzeitig in den zweiten Rastkerben 59, oder alle Kugeln 52 liegen gleichzeitig an einander entsprechenden Stellen auf den Kugellaufbahnen 57. Durch die stabile Lage der Kugeln 52 in den ersten oder zweiten Rastkerben 58, 59 ergibt sich dort eine erste bzw. zweite Raststellung der Betätigungseinrichtung 34. Die beiden Raststellungen entsprechen den beiden Enden der Drehbewegung des Handgriffs 8, wobei die erste Raststellung der Ruhestellung, d. h. der unbetätigten Stellung, und die zweite Raststellung der vollständig betätigten Stellung der Betätigungseinrichtung 34 entspricht. Wie in Fig. 9 zu erkennen, sind die Übergänge zwischen jeweils einer ersten Rastkerbe 58 einer Kugellaufbahn 57 und eine zweiten Rastkerbe 59 einer benachbarten Kugellaufbahn 57 durch dazwischen liegende erhöhte Bereiche sowie durch starke Steigungen derart gestaltet, dass ein Übertritt der Kugeln 52 in dieser Richtung nicht möglich ist.

Die Kugellaufbahnen 57 sind gegenüber einer auf die Längsachse der Werkzeugmaschine 1 senkrecht stehenden Ebene geneigt, beispielsweise um 2,3 Grad, und weisen in diesem Ausführungsbeispiel eine konstante Steigung auf. Deshalb verlaufen die sich einander gegenüberliegenden Kugellaufbahnen 57 auf dem ersten bzw. auf dem zweiten Steigungsring 50, 51 parallel zueinander. Wird nun der erste Steigungsring 50 über den Drehgriff 8 und die Stifte 53 entgegen dem Uhrzeigersinn gedreht, so wird jede Kugel 52 zunächst gleichzeitig aus beiden ersten Rastkerben 58 auf beiden Steigungsringen 50, 51 herausgedrückt, wodurch die erste Raststellung überwunden und so dem Benutzer durch ein haptisches Feedback signalisiert wird, dass die Ruhestellung verlassen wird. Jede Kugel 52 rollt dann auf jeweils einer Kugellaufbahn 57 auf dem ersten und auf dem zweiten Steigungsring 50, 51 ab, wobei sich aber nur der erste Steigungsring 50 dreht. Wie anhand von Fig. 10 zu erkennen, bewegt sich jede Kugel 52 dabei relativ zum ersten Steigungsring 50 im Uhrzeigersinn und relativ zum zweiten Steigungsring 51 gegen den Uhrzeigersinn, wobei die axiale Ausdehnung der beiden Steigungsringe 50, 51 an den beiden Kontaktpunkten mit der Kugel 52 aufgrund der schrägen Anordnung der beiden Kugellaufbahnen 57 stets zunimmt. Da der erste Steigungsring 50 axial nicht verschiebbar ist, da er von dem Axiallager 54 abgestützt wird, bewegt sich stattdessen der zweite Steigungsring 51 nach außen. Am Ende der Drehbewegung des Drehgriffs 8 (im Ausführungsbeispiel um etwa 210 Grad) rastet jede Kugel 52 auf beiden Steigungsringen 50, 51 in die jeweilige zweite Rastkerbe 59 ein, wodurch dem Benutzer signalisiert wird, dass die zweite Raststellung erreicht wurde und somit die Betätigungseinrichtung 34 vollständig betätigt wurde.

Bei einer alternativen Ausführungsform (nicht dargestellt) kann der Drehgriff 8 so ausgelegt sein, dass das Ende der vorbeschriebenen Drehbewegung bereits nach 120 Grad erreicht wird und die Kugeln 52 in die entsprechenden zweiten Rastkerben 59 einrasten.

Bei einer weiteren alternativen Ausführung (ebenfalls nicht dargestellt) kann die Steigung der Kugellaufbahnen 57 variabel ausgebildet sein. Dadurch ist es möglich, die Betätigungskräfte anzupassen bzw. zu reduzieren.

Bei der axialen Bewegung des zweiten Steigungsrings 51 werden entsprechend auch die Stifte 25 in den Langlöchern 61 im Halslager 7, damit auch der Ring 24 der Löseeinrichtung 21 und mit diesem starr verbunden ein Druckstück 22 nach außen verschoben. Die äußere Stirnfläche des Druckstücks 22 drückt dann, wie in Fig. 4 zu sehen, gegen die innere Stirnfläche der Fliehgewichte 40 der Löseverhinderungseinrichtung 16. Diese schiebt, wie oben beschrieben, den Zugstab 37 gegen die von dem vorgespannten Tellerfederpaket 15 erzeugte Rückstellkraft nach außen und entspannt somit die Spannzange 9, sodass ein Werkzeugwechsel vorgenommen werden kann.

Das Druckstück 22 weist auf seinem zylindrischen Teil nahe seinem äußeren Ende eine durchgehende dreieckfömige Öffnung 26 auf, welche aber nur einer vereinfachten Montage und Zentrierung des Druckstücks 22 dient.

Bei der Bewegung der Betätigungseinrichtung 34 von der ersten Raststellung in die zweite Raststellung wird gleichzeitig eine Spiralfeder 23 gespannt. Die Spiralfeder 23 stützt sich an ihrem äußeren Ende an einem im Halslager 7 fest eingepressten Ring 63 und an ihrem inneren Ende an dem Ring 24 der Löseeinrichtung 21 ab (siehe Fig. 4).

Die umgekehrte Bewegung der Betätigungseinrichtung 34 von der zweiten Raststellung in die erste Raststellung verläuft analog zu der oben beschriebenen Bewegung, nur in umgekehrter Richtung, und bewirkt, dass der zweite Steigungsring 51 sich wieder nach innen bewegt. Dadurch wird der Druck durch das Druckstück 22 auf die Fliehgewichte 40 wieder aufgehoben und die Spannzange 9 über die Spanneinrichtung 13 wieder gespannt, wodurch der Werkzeugwechsel abgeschlossen ist.

Da bei dieser umgekehrten Bewegung auch die Spiralfeder 23 entspannt wird und den zweiten Steigungsring 51 nach innen drückt, muss der Benutzer lediglich die zweite Raststellung in der umgekehrten Richtung überwinden und den Drehgriff 8 loslassen, woraufhin die genannte umgekehrte Bewegung, von der Entspannung der Spiralfeder 23 angetrieben, von selbst abläuft. Am Ende dieser selbsttätigen umgekehrten Bewegung der Betätigungseinrichtung 34 rasten die Kugeln 52 schließlich auch von selbst in die ersten Rastkerben 58 ein, wodurch sich die Betätigungseinrichtung 34 wieder in der Ruhestellung befindet und dies dem Benutzer durch das "Einschnappen" des Drehgriffs 8 signalisiert wird. Hierdurch wird den Benutzungskomfort der Werkzeugmaschine 1 weiter verbessert.

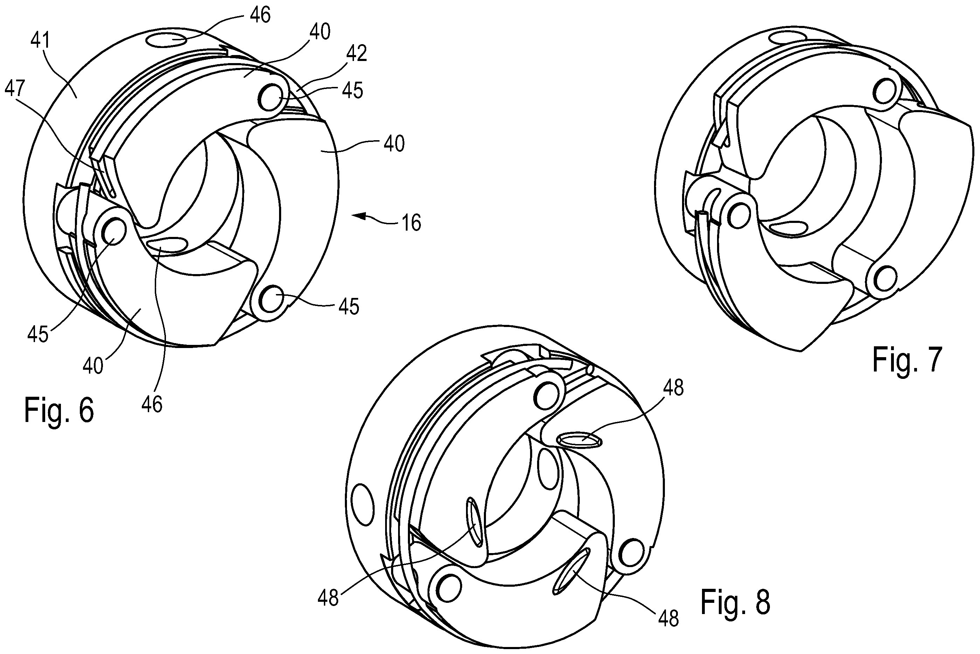

Wie bereits oben erläutert, darf die Spannzange 9 aus Sicherheitsgründen nur bei stillstehender Kopplungswelle 14 entspannt werden. Um zu verhindern, dass die Spannzange 9 bei rotierender Kopplungswelle 14 entspannt wird, ist die Löseverhinderungseinrichtung 16 vorgesehen, welche in den Fig. 6 bis 8 detailliert dargestellt ist.

Die Löseverhinderungseinrichtung 16 weist mehrere (im Ausführungsbeispiel drei) Fliehgewichte 40 auf, welche durch Drehlager 45 um jeweils eine zur Kopplungswelle 14 parallel verlaufende Achse drehbar an der inneren Stirnseite eines Fliehgewichtträgers 41 angeordnet sind. Der Fliehgewichtträger 41 weist zwei einander radial gegenüberliegende Öffnungen 46 auf, durch welche, wie bereits beschrieben, ein Stift 38 geführt und radial innen mit dem Zugstab 37 verbunden ist.

Die Fliehgewichte 40 sind durch einen gemeinsamen, umlaufenden Federring 42, der in Nuten 47 der Fliehgewichte 40 geführt wird, nach radial innen vorgespannt (siehe Fig. 4, 6 und 8). Wenn die Kopplungswelle 14 rotiert, werden die Fliehgewichte 40 durch die dann wirkende Fliehkraft jeweils um das Drehlager 45 nach radial außen bewegt (siehe Fig. 5 und 7). Wenn die Kopplungswelle 14 wieder zum Stillstand kommt, werden die Fliehgewichte 40 durch den Federring 42 wieder nach radial innen gedrückt.

Die äußere Stirnfläche des Druckstücks 22 ist derart angeordnet, dass sie die innere Stirnfläche der Fliehgewichte 40 in einem radial inneren Bereich kontaktiert, wenn die Fliehgewichte 40 sich in ihrer Ruhestellung befinden, also nicht durch die Fliehkraft nach außen bewegt sind. In dieser Stellung der Fliehgewichte 40 kann dann von dem Druckstück 22 die Lösekraft auf die Fliehgewichte 40 und über den Fliehgewichtträger 41 und den Zugstab 37 übertragen werden, um die Spannzange 9 zu entspannen. Der Radius der Kontaktfläche zwischen dem Druckstück 22 und den Fliehgewichten 40 ist jedoch so klein, dass bei durch die Fliehkraft nach außen bewegten Fliehgewichten 40 kein Kontakt mehr zwischen dem Druckstück 22 und den Fliehgewichten 40 stattfinden kann. Wird die Betätigungseinrichtung 34 bei rotierender Kopplungswelle 14 betätigt, so drückt die äußere Stirnfläche des Druckstücks 22 daher "ins Leere". Auf diese Weise wird verhindert, dass die Spannzange 9 bei rotierender Kopplungswelle 14 entspannt wird.

Fig. 8 zeigt noch eine Variante der Löseverhinderungseinrichtung 16, bei der jedes Fliehgewicht 40 in dem Kontaktbereich mit dem Druckstück 22, d. h. am radial inneren Rand seiner inneren Stirnfläche, einen Vorsprung 48 aufweist, welcher vorzugsweise im Querschnitt linsenförmig ausgebildet ist. Entsprechend weist in dieser Variante die äußere Stirnfläche des Druckstücks 22 spiralförmige Nuten auf (nicht dargestellt). Diese greifen bei einer relativen Drehbewegung zwischen den Fliehgewichten 40 und dem Druckstück 22 in die Vorsprünge 48 in Umfangsrichtung ein und bewirken, dass die Fliehgewichte 40 dann ebenfalls nach außen bewegt werden, sodass kein Kontakt mehr zwischen dem Druckstück 22 und den Fliehgewichten 14 stattfindet.

Hierdurch wird bewirkt, dass, wenn die Werkzeugmaschine 1 bei betätigter Löseeinrichtung 21 eingeschaltet wird und die Kopplungswelle 14 zu rotieren beginnt, das Druckstück 22 wiederum "ins Leere" drückt, somit die auf die Spanneinrichtung 13 wirkende Lösekraft wieder wegfällt und die Spannzange 9 den Werkzeugschaft wieder fest einklemmt. Der Zustand, dass die Spannzange 9 beim Anlaufen der Kopplungswelle 14 bei betätigter Löseeinrichtung 21 nicht gespannt ist, wird damit vermieden.

In diesem Fall kann die Löseverhinderungseinrichtung 16 ihre oben beschriebene Funktion nicht erfüllen, da die durch den Druck des Druckstücks 22 auf die Fliehgewichte 40 erzeugte Reibung die Fliehgewichte 40 daran hindern würde, sich nach radial außen zu bewegen und überdies die geringen Drehzahlen beim Anlaufen der Kopplungswelle 14 auch keine hinreichend große Fliehkraft erzeugen würden.

Wie oben bereits beschrieben, kann jedoch alternativ zu dieser Variante das Anlaufen der Kopplungswelle 14 bei betätigter Löseeinrichtung 21 auch ganz verhindert werden, insbesondere mithilfe eines Lagesensors oder einer Überwachung des Motorstromes eines Elektromotors in der Antriebseinheit 2.

Fig. 11 zeigt eine zweite Ausführungsform einer erfindungsgemäßen Befestigungs- und Kopplungsvorrichtung 6. Diese unterscheidet sich von der ersten Ausführungsform gemäß den Fig. 2 bis 10 im Wesentlichen durch eine andere Konstruktion der Betätigungseinrichtung 34.

Bei dieser zweiten Ausführungsform wird die Drehbewegung des Handgriffs 8 nicht durch zwei Steigungsringe in eine axiale Bewegung umgewandelt, sondern durch eine Kulissensteuerung. Zu diesem Zweck weist das Halslager 7 mehrere (im Ausführungsbeispiel wieder drei) Kulissennuten 56 auf, welche als Langlöcher ausgebildet sind. In jeder Kulissennut 56 ist ein radial angeordneter Stift (alternativ eine Schraube) 25 als Kulissenfolger verschiebbar angeordnet. Um den Stift 25 herum ist jeweils noch eine Rolle 55 angeordnet, welche in der Kulissennut 56 abrollt, um die Reibung zwischen dem Kulissenfolger und der Kulissennut 56 zu verringern. Die Stifte 25 sind an ihren radial äußeren Enden fest mit dem Drehgriff 8 verbunden und an ihren radial inneren Enden in entsprechenden Öffnungen in dem Ring 24 der Löseeinrichtung 21 ebenfalls fest mit diesem verbunden.

Jede Kulissennut 56 weist an jeweils zumindest einem Ende einen stark gekrümmten Abschnitt auf, durch den eine erste Raststellung, ähnlich wie oben im Zusammenhang mit der ersten Ausführungsform beschrieben, realisiert ist. Daran schließt sich ein längerer Abschnitt an, welcher gegenüber einer auf der Längsachse der Werkzeugmaschine 1 senkrecht stehenden Ebene geneigt ist. Wenn sich der Stift 25 mit der Rolle 55 entlang dieses schräg angeordneten Abschnitts der Kulissennut 56 bewegt, bewegt sich die Einheit aus Drehgriff 8 und Ring 24 aufgrund der Keilwirkung der Kulissensteuerung gleichzeitig nach außen. Die Steigung des schräg angeordneten Abschnitts der Kulissennut 56 kann variabel sein, damit der Benutzer die ansteigende, der Drehbewegung des Handgriffs 8 entgegenwirkende Federkraft der Spanneinrichtung 13 leichter überwinden kann. Am anderen Ende der Kulissennut 56 ist ein Abschnitt zur Realisierung einer zweiten Raststellung angeordnet. Diese zweite Raststellung ist dadurch realisiert, dass sich die Steigung der Kulissennut 56 in diesem Bereich in die andere Richtung ändert, beispielsweise negativ wird.

Die Kulissennut 56 kann auch einen Abschnitt aufweisen, der im Wesentlichen zur Längsachse parallel verläuft, sodass nacheinander eine Schiebe- und eine Drehbewegung (oder umgekehrt) erforderlich sind, um die Betätigungseinrichtung 34 zu betätigen. Dies dient einer erhöhten Sicherheit im Betrieb der Werkzeugmaschine 1, da zwei voneinander getrennte Bewegungsabläufe erforderlich sind, um das Werkzeug zu lösen.

Im Unterschied zur ersten Ausführungsform bewegt sich in diesem Fall also auch der Drehgriff 8 nach außen, was aufgrund des geringen axialen Verfahrwegs bei der Betätigung der Betätigungseinrichtung 34 aber nicht störend wirkt. Umgekehrt eröffnet dies sogar den Vorteil, dass die erste Raststellung durch ein Einrasten des Drehgriffs 8 in einer axialen Stellung realisiert werden kann. Zu diesem Zweck ist ein Sprengring 64 aus Runddraht vorgesehen, der in einer Nut (nicht dargestellt) in der radial inneren Oberfläche des Handgriffs 8 eingesetzt ist und in der ersten Raststellung gleichzeitig in eine Nut 65 auf der radial äußeren Oberfläche des Halslagers 7 einrasten kann. Entsprechend kann auch noch eine zweite, hierzu parallele Nut auf der radial äußeren Oberfläche des Halslagers 7 für die zweite Raststellung vorgesehen sein. Während der Bewegung des Handgriffs 8 zwischen der ersten und der zweiten Raststellung wird der Sprengring 64 dagegen nach radial außen noch tiefer in die Nut im Handgriff 8 gedrückt, welche zu diesem Zweck entsprechend tiefer ausgebildet ist.

Am äußeren Ende des Rings 24 der Löseeinrichtung 21 ist ein Druckstück 22 angeformt, welches in der oben im Zusammenhang mit der ersten Ausführungsform beschriebenen Weise auf die Fliehgewichte 40 der Löseverhinderungseinrichtung 16 drückt, wenn die Kopplungswelle 14 stillsteht. Im Unterschied zur ersten Ausführungsform dreht sich hierbei auch der Ring 24 und damit das Druckstück 22 bei seiner axialen Verschiebung mit, was sich jedoch nicht nachteilig auf die Kraftübertragung auf die Fliehgewichte 40 auswirkt.

Weiterhin unterscheidet sich in der zweiten Ausführungsform auch die Löseverhinderungseinrichtung 16 geringfügig von derjenigen der ersten Ausführungsform. So sind hier die Fliehgewichte 40 axial vollständig innerhalb des Fliehgewichtträgers 41 angeordnet und werden auf der inneren Seite des Fliehgewichtträgers 41 durch einen Sicherungsring 44 am Herausfallen gehindert. Die Vorspannung der Fliehgewichte 40 nach radial innen erfolgt in diesem Fall auch nicht durch einen gemeinsamen, umlaufenden Federring, sondern für jedes Fliehgewicht 40 einzeln durch jeweils eine kleine Spiralfeder 43, welche sich radial außen an der Mantelfläche des Fliehgewichtträgers 41 und radial innen in einer Sacklochbohrung 49 in dem jeweiligen Fliehgewicht 40 abstützt. Die Funktionsweise der Löseverhinderungseinrichtung 16 ist in der zweiten Ausführungsform jedoch identisch mit derjenigen der ersten Ausführungsform.

### Bezugszeichenliste

- 1: Werkzeugmaschine
- 2: Antriebseinheit
- 3: Gehäuse
- 4: Schalter
- 5: Kabel
- 6: Befestigungs- und Kopplungsvorrichtung
- 7: Halslager
- 8: Drehgriff
- 9: Spannzange
- 10: Spannzangenaufnahme
- 11: Schutzhülse
- 12: Bajonettfassung
- 13: Spanneinrichtung
- 14: Kopplungswelle
- 15: Tellerfederpaket
- 16: Löseverhinderungseinrichtung
- 17: Filzring
- 18: Wuchtring
- 19: Wälzlager
- 20: Längsnut
- 21: Löseeinrichtung
- 22: Druckstück
- 23: Spiralfeder
- 24: Ring
- 25: Stift
- 26: Dreieckförmige Öffnung
- 27: Flansch des Halslagers
- 28: Schraubenöffnung
- 29: Deckel der Antriebseinheit
- 30: Schraube
- 31: Wälzlager
- 32: Dichtungsring
- 33: Sicherungsring
- 34: Betätigungseinrichtung
- 35: Stift für Bajonettfassung
- 36: Elastomerelement
- 37: Zugstab
- 38: Stift
- 39: Keil

- 40: Fliehgewicht
- 41: Fliehgewichtträger
- 42: Federring
- 43: Spiralfeder
- 44: Sicherungsring
- 45: Drehlager für Fliehgewicht
- 46: Öffnung für Stift
- 47: Nut für Federring
- 48: Vorsprung auf dem Fliehgewicht
- 49: Sacklochbohrung

- 50: Erster Steigungsring
- 51: Zweiter Steigungsring
- 52: Kugel
- 53: Stift
- 54: Axiallager
- 55: Rolle
- 56: Kulissennut
- 57: Kugellaufbahn
- 58: Erste Rastkerbe
- 59: Zweite Rastkerbe
- 60: Langloch in der Kopplungswelle
- 61: Langloch im Halslager
- 62: Sicherungsring
- 63: Ring im Halslager
- 64: Sprengring
- 65: Nut im Halslager

## Patentansprüche

1. Befestigungs- und Kopplungsvorrichtung (6) für ein rotierendes Werkzeug, welche zur Verbindung mit einer Antriebseinheit (2) einer Werkzeugmaschine (1) mit einem rotierenden Antrieb vorgesehen ist, aufweisend
- eine Kopplungswelle (14) mit einer Längsachse, wobei die Kopplungswelle (14), wenn die Befestigungs- und Kopplungsvorrichtung (6) mit der Antriebseinheit (2) der Werkzeugmaschine (1) verbunden ist, durch den rotierenden Antrieb um die Längsachse rotierbar ist,
- eine Spannzange (9) zur lösbaren Aufnahme eines, insbesondere zylindrischen, Werkzeugschaftes, welche durch eine Relativbewegung entlang der Längsachse gegenüber einer mit der Kopplungswelle (14) drehfest, insbesondere einstückig, verbundenen Spannzangenaufnahme (10) zwischen einer Spannstellung, in welcher der Werkzeugschaft in der Spannzange (9) derart eingespannt ist, dass er drehfest mit der Kopplungswelle (14) verbunden und um die Längsachse rotierbar ist, und einer Lösestellung, in welcher der Werkzeugschaft aus der Spannzange (9) entnehmbar bzw. in die Spannzange (9) einsetzbar ist, bewegbar ist,
- eine Spanneinrichtung (13), welche die Spannzange (9) und die Spannzangenaufnahme (10) aufweist und dazu eingerichtet ist, in einem von außen unbelasteten Zustand die Spannstellung der Spannzange (9) aufrechtzuerhalten, die Spannzange (9) bei einer Beaufschlagung der Spanneinrichtung (13) von außen mit einer Lösekraft von der Spannstellung in die Lösestellung zu bewegen und die Spannzange (9) beim Wegfall der Lösekraft von der Lösestellung in die Spannstellung zu bewegen,
- eine Löseeinrichtung (21), gegenüber welcher die Kopplungswelle (14) rotierbar ist und welche dazu eingerichtet ist, bei einer Betätigung der Löseeinrichtung (21) bei stillstehender Kopplungswelle (14) die Spanneinrichtung (13) mit der Lösekraft zu beaufschlagen,
- eine Betätigungseinrichtung (34), welche durch den Benutzer der Werkzeugmaschine (1), insbesondere durch Handkraft, betätigbar und dazu eingerichtet ist, die Löseeinrichtung (21) zu betätigen sowie die Betätigung der Löseeinrichtung (21) zu beenden.

2. Befestigungs- und Kopplungsvorrichtung (6) gemäß Anspruch 1, **dadurch gekennzeichnet, dass** die Spanneinrichtung (13) wenigstens ein vorgespanntes Federelement (15) zur Aufrechterhaltung der Spannstellung der Spannzange (9) in dem von außen unbelasteten Zustand aufweist.

3. Befestigungs- und Kopplungsvorrichtung (6) gemäß Anspruch 2, **dadurch gekennzeichnet, dass** die Spanneinrichtung (13) dazu eingerichtet ist, die Spannzange (9) durch eine durch die Vorspannung des wenigstens einen vorgespannten Federelements (15) erzeugte Rückstellkraft in die Spannzangenaufnahme (10) hineinzuziehen.

4. Befestigungs- und Kopplungsvorrichtung (6) gemäß Anspruch 3, **dadurch gekennzeichnet, dass** die Spanneinrichtung (13) einen Zugstab (37) zur Übertragung der Zugkraft von dem wenigstens einen vorgespannten Federelement (15) auf die Spannzange (9) aufweist und dass die Spannzange (9) mit dem Zugstab (37), insbesondere durch eine Schraubverbindung oder eine Bajonettverbindung (12, 35), lösbar verbunden ist.

5. Befestigungs- und Kopplungsvorrichtung (6) gemäß einem der Ansprüche 2 bis 4, **dadurch gekennzeichnet, dass** das wenigstens eine vorgespannte Federelement (15) wenigstens eine Tellerfeder, vorzugsweise ein Stapel aus einer Mehrzahl von Tellerfedern ist.

6. Befestigungs- und Kopplungsvorrichtung (6) gemäß einem der Ansprüche 2 bis 5, **dadurch gekennzeichnet, dass** die Löseeinrichtung (21) dazu eingerichtet ist, die Spanneinrichtung (13) bei stillstehender Kopplungswelle (14) derart mit der Lösekraft zu beaufschlagen, dass diese der durch die Vorspannung des wenigstens einen vorgespannten Federelements (15) erzeugten Rückstellkraft entgegenwirkt.

7. Befestigungs- und Kopplungsvorrichtung (6) gemäß einem der vorhergehenden Ansprüche, **dadurch gekennzeichnet, dass** die Spanneinrichtung (13) weiterhin eine Löseverhinderungseinrichtung (16) aufweist, welche dazu eingerichtet ist zu verhindern, dass die Spanneinrichtung (13) bei rotierender Kopplungswelle (14) mit der Lösekraft beaufschlagt wird.

8. Befestigungs- und Kopplungsvorrichtung (6) gemäß Anspruch 7, **dadurch gekennzeichnet, dass** die Löseverhinderungseinrichtung (16) gegenüber der Kopplungswelle (14) drehfest angeordnet ist und wenigstens ein Fliehgewicht (40) aufweist, wobei die Löseeinrichtung (21) derart angeordnet ist, dass die Beaufschlagung der Spanneinrichtung (13) mit der Lösekraft bei einer Betätigung der Löseeinrichtung (21) bei stillstehender Kopplungswelle (14) durch einen Kontakt und eine Übertragung der Lösekraft in Richtung der Längsachse zwischen wenigstens einem ersten Kontaktpunkt auf dem wenigstens einen Fliehgewicht (40) und wenigstens einem zweiten Kontaktpunkt auf der Löseeinrichtung (21) erfolgt, wobei das wenigstens eine Fliehgewicht (40) nach radial innen vorgespannt ist und der wenigstens eine erste Kontaktpunkt bei rotierender Kopplungswelle (14) durch die Fliehkraft derart nach radial außen bewegbar ist, dass bei einer Betätigung der Löseeinrichtung (21) bei rotierender Kopplungswelle (14) kein Kontakt zwischen dem wenigstens einen ersten Kontaktpunkt und dem wenigstens einen zweiten Kontaktpunkt und damit auch keine Übertragung der Lösekraft stattfinden kann.

9. Befestigungs- und Kopplungsvorrichtung (6) gemäß Anspruch 8, **dadurch gekennzeichnet, dass** das wenigstens eine Fliehgewicht (40) im Bereich des wenigstens einen ersten Kontaktpunktes und die Löseeinrichtung (21) im Bereich des wenigstens einen zweiten Kontaktpunktes jeweils gegenüber einer senkrecht auf der Längsachse stehenden Ebene wenigstens einen Vorsprung (48) und/oder wenigstens eine Vertiefung aufweisen, welche derart angeordnet sind, dass das wenigstens eine Fliehgewicht (40) bei einem Kontakt und einer Übertragung der Lösekraft zwischen dem wenigstens einen ersten Kontaktpunkt und dem wenigstens einen zweiten Kontaktpunkt und bei einem Anlauf der Kopplungswelle (14) aus dem Stillstand nach radial außen bewegbar ist, wodurch kein Kontakt mehr zwischen dem wenigstens einen ersten Kontaktpunkt und dem wenigstens einen zweiten Kontaktpunkt und damit auch keine Übertragung einer Lösekraft mehr stattfinden kann.

10. Befestigungs- und Kopplungsvorrichtung (6) gemäß einem der vorhergehenden Ansprüche, **dadurch gekennzeichnet, dass** die Betätigungseinrichtung (34) dazu eingerichtet ist, eine durch den Benutzer ausgeführte, zur Längsachse koaxiale Drehbewegung eines Betätigungselements (8) in eine Bewegung entlang der Längsachse zur Betätigung der Löseeinrichtung (21) umzuwandeln.

11. Befestigungs- und Kopplungsvorrichtung (6) gemäß Anspruch 10, **dadurch gekennzeichnet, dass** die Umwandlung der Drehbewegung in die Bewegung entlang der Längsachse durch ein Keilgetriebe (50-52; 25, 55, 56) erfolgt.

12. Befestigungs- und Kopplungsvorrichtung (6) gemäß Anspruch 11, **dadurch gekennzeichnet, dass** das Keilgetriebe (25, 55, 56) wenigstens eine Kulissennut (56) mit wenigstens einem gegenüber einer senkrecht auf der Längsachse stehenden Ebene schräg verlaufenden Abschnitt und wenigstens einem in der Kulissennut (56) verschiebbaren Kulissenfolger (25, 55) aufweist, wobei die Kulissennut (56) relativ zu der Werkzeugmaschine (1) unbeweglich und der Kulissenfolger (25, 55) um die Längsachse drehbar angeordnet ist oder umgekehrt.

13. Befestigungs- und Kopplungsvorrichtung (6) gemäß Anspruch 11, **dadurch gekennzeichnet, dass** das Keilgetriebe (50-52) zwei einander in der Längsrichtung gegenüberliegende Flächen (57-59) aufweist, von denen wenigstens eine einen gegenüber einer senkrecht auf der Längsachse stehenden Ebene schräg verlaufenden Abschnitt (57) aufweist, wobei genau eine der beiden Flächen (57-59) um die Längsachse drehbar und genau eine der beiden Flächen (57-59) entlang der Längsachse verschiebbar angeordnet ist und wobei zwischen den beiden Flächen (57-59) wenigstens ein Wälzkörper, insbesondere wenigstens eine Kugel (52), angeordnet ist.

14. Werkzeugmaschine (1) mit einer Antriebseinheit (2) und einer mit der Antriebseinheit (2) verbundenen Befestigungs- und Kopplungsvorrichtung (6) gemäß einem der vorhergehenden Ansprüche.

15. Werkzeugmaschine (1) gemäß Anspruch 14, **gekennzeichnet durch** einen Sensor, insbesondere einen Lagesensor, welcher dazu eingerichtet ist, eine Betätigung der Löseeinrichtung (21) zu detektieren, und eine Antriebssteuerung, welche dazu eingerichtet ist, die Antriebseinheit (2) so zu steuern, dass ein Anlauf der Kopplungswelle (14) aus dem Stillstand bei betätigter Löseeinrichtung (21) verhindert wird.

16. Werkzeugmaschine (1) gemäß Anspruch 14, **dadurch gekennzeichnet, dass** die Antriebseinheit (2) einen Elektromotor, einen Stromsensor zur Detektion des Motorstromes und eine Antriebssteuerung aufweist, welche dazu eingerichtet ist, aus der Detektion des Motorstromes beim Anlauf der Kopplungswelle (14) aus dem Stillstand eine Betätigung der Löseeinrichtung (21) zu detektieren und die Antriebseinheit (2) so zu steuern, dass ein Anlauf der Kopplungswelle (14) aus dem Stillstand bei betätigter Löseeinrichtung (21) verhindert wird.
